# EUROPEAN PATENT SPECIFICATION

(11) **EP 1 519 068 B1**
(45) Date of publication and mention of the grant of the patent: **26.07.2006**
(21) Application number: 04022327.3
(22) Date of filing: 20.09.2004
(51) Int. Cl.: B60W 10/02, B60W 10/06

(54) **Clutch control device**
Kupplungssteuerungsvorrichtung
Dispositif de commande d'embrayage

(30) Priority: 24.09.2003 JP 2003331705
(43) Date of publication of application: 30.03.2005
(73) Proprietor: AISIN SEIKI KABUSHIKI KAISHA, Kariya-shi, Aichi-ken 448-8650 (JP)
(72) Inventor: Tamaru, Daisuke c/o Intell. Property Department, Kariya-shi, Aichi-ken, 448-8650 (JP)
(74) Representative: Kramer - Barske - Schmidtchen

(56) References cited:
- WO-A-02/055905
- DE-A- 10 302 172
- GB-A- 2 353 835
- US-A- 4 860 208
- US-A- 5 491 635

## Description

### FIELD OF THE INVENTION

This invention generally relates to a clutch control device for automatically controlling an engagement state of a clutch mechanism. More specially, this invention relates to a clutch control device for automatically controlling an engagement state of the clutch mechanism between an engine equipped with a super charger and a transmission for a vehicle.

### BACKGROUND

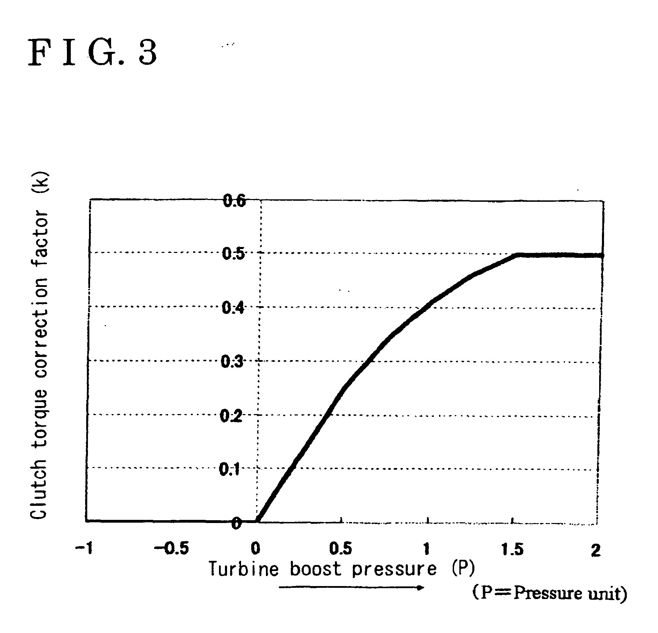

Known clutch control device for an automatic transmission calculates an engaging amount of a clutch to be controlled by using at least one function generator with a parameter of an engine rotation number. JP09(1997)-112589A2 discloses an engaging amount determination map for obtaining the engaging amount of the clutch in response to the engine rotation number or an input shaft rotation number in Fig. 3. According to such a clutch control device including the engaging amount determination map, it is determined whether the engaging amount of the clutch is appropriate or not based on the engine rotation speed or the input shaft rotation speed being detected.

When the fluctuation of an output torque is large relative to the engine rotation number, however, the appropriate engaging amount may not be determined according to the aforementioned control method. For example, a response delay of boost pressure being created may be caused in the engine equipped with a super charger. Therefore, the large change of the torque after the boost pressure being created may not be reflected in the engaging amount and thus the determined engaging amount of the clutch may be too small (or large). The stability of clutch control may not be assured accordingly. Further, according to the disclosed technique, the engaging amount obtained by the engaging amount determination map is corrected based on another engaging amount determination map using an engine acceleration being calculated as a feedback term. However, this method may not be effective under the condition that the fluctuation of the output torque is large relative to the engine rotation speed as mentioned above.

Further, it is considered that the engaging amount is determined based on an estimated engine torque calculated by a parameter such as the engine rotation speed. However, it may be difficult to assure a robustness of control relative to a difference between the estimated engine torque and the actually output engine torque, and the response delay.

Thus, a need exists for a clutch control device that can be used under the condition that the fluctuation of the output torque is large relative to the engine rotation speed. A clutch control device according to the preamble of claim 1 is known from US-A-4,860,208.

### SUMMARY OF THE INVENTION

The above object is achieved by the clutch control device according to claim 1.

According to the aforementioned invention, an appropriate control of the clutch in response to a fluctuation of the engine torque may be achieved since a fluctuation of a term (parameter) affecting increase/decrease of the engine torque is reflected in the target engaging amount of the clutch.

### BRIEF DESCRIPTION OF THE DRAWINGS

The foregoing and additional features and characteristics of the present invention will become more apparent from the following detailed description considered with reference to the accompanying drawings, wherein:

Fig. 1 is a schematic view of a vehicle structure according to an embodiment of the present invention;

Fig. 2 is a block diagram of a process conducted by a clutch control device according to the embodiment of the present invention;

Fig. 3 is a graph showing an example of a characteristic map for obtaining a clutch torque correction factor;

Fig. 4 is a graph showing each change of a turbine boost pressure, a target clutch torque before correction, and a target clutch torque after correction; and

Fig. 5 is a graph showing each change of an engine rotation speed, an input shaft rotation speed by the target clutch torque before correction, and an input shaft rotation speed by the target clutch torque after correction.

### DETAILED DESCRIPTION

An embodiment of the present invention is explained referring to attached drawings. The present embodiment includes an engine rotation sensor, a boost pressure sensor, a calculation means for calculating a target engaging amount of a clutch based on the engine rotation number obtained by the engine rotation sensor, and a correction means for correcting the target engaging amount of the clutch based on the boost pressure value of a super charger obtained by the boost pressure sensor for evaluating a target engaging amount of the clutch by a feedforward system.

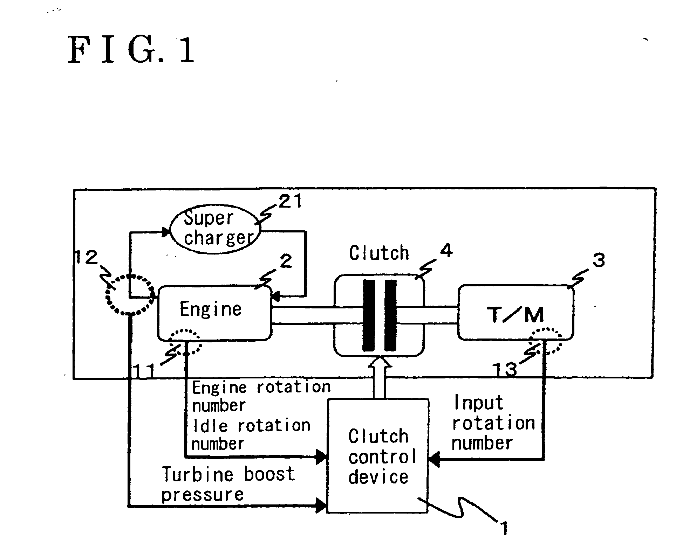

An engine torque fluctuation is considered to be caused by a variable cam lift mechanism, a supercharger mechanism or the like that aim for improving the fuel consumption, an output and torque. The embodiment of the present invention is employed in a clutch control system constituted by an engine with the super charger and an automatic clutch being combined. Fig. 1 is a schematic view of a structure of a vehicle in which a clutch control device 1 is mounted. The vehicle includes an engine 2 equipped with a super charger 21, a transmission (T/M) 3, and a clutch 4. The clutch control device 1 includes an engine rotation sensor (a first sensor) 11, a turbine boost pressure sensor (a second sensor) 12, and an input shaft rotation sensor 13 on the transmission 3 side. The clutch control device 1 controls an engaging state of the clutch 4 by a clutch actuator or via an electromagnetic valve directly to thereby operate a clutch piston.

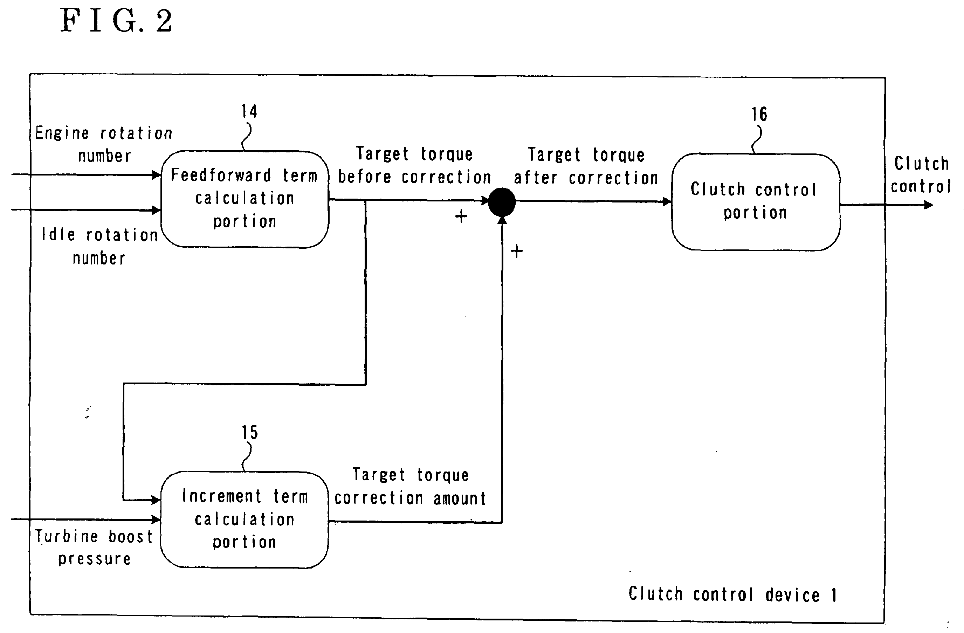

Fig. 2 is a block diagram showing a process performed by the clutch control device 1. The clutch control device 1 includes a feedforward term calculation portion 14, an increment term calculation portion 15, and a clutch control portion 16. The feedforward term calculation portion 14 includes a characteristic map for obtaining a clutch torque in response to an increase amount of the engine rotation speed and calculates a target clutch torque before correction TT₀ (ΔNe) based on a difference between the engine rotation speed and the idle rotation speed being input to the feedforward term calculation portion 14, i.e. increase amount of the engine rotation number ΔNe. The increment term calculation portion 15 includes a characteristic map for obtaining a clutch torque correction factor, which is a clutch torque correction rate, in response to the turbine boost pressure and calculates a target clutch torque correction amount k•TT₀ (ΔNe) based on the target clutch torque before correction TT₀ (ΔNe) calculated by the feedforward term calculation portion 14 and the clutch torque correction factor k obtained from the turbine boost pressure. The clutch control portion 16 calculates a target clutch torque after correction TT₁=(k+1) •TT₀ (ΔNe) by adding the aforementioned target clutch torque before correction TT₀ (ΔNe) and the target clutch torque correction amount k•TT₀ (ΔNe), thereby controlling the engaging amount of the clutch 4.

Fig. 3 is a graph showing an example of a characteristic map for obtaining the clutch torque correction factor in response to the turbine boost pressure. According to Fig. 3, the clutch torque correction factor increases to 0.5 at a maximum along with the increase of the turbine boost pressure, thereby increasing the target clutch torque.

The clutch control portion 16 controls the engaging amount of the clutch 4 by the target clutch torque calculated based on the engine rotation speed and then corrected in response to the turbine boost pressure as a final target clutch torque.

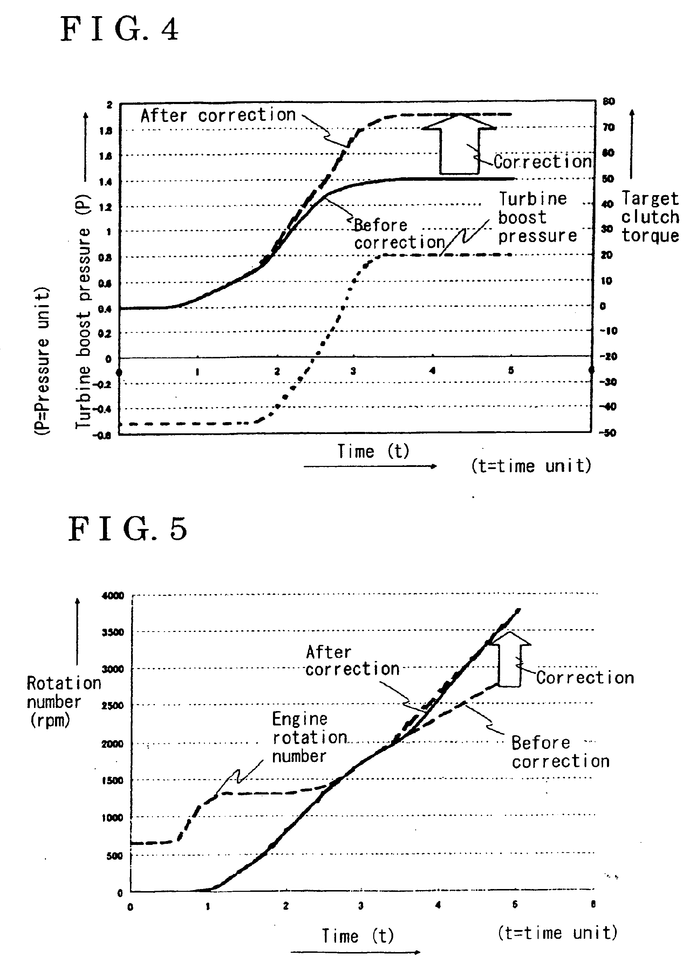

Fig. 4 is a graph showing each change of an output value of the feedforward term calculation portion 14 (i.e. target clutch torque before correction) and the final target clutch torque to which the correction is applied by the increment term calculation portion 15 (i.e. target clutch torque after correction) by using the characteristic map in Fig. 3 at a time of the vehicle start with a constant accelerator opening. A dotted line in Fig. 4 represents the turbine boost pressure. According to Fig. 4, a response of the turbine boost pressure is delayed relative to a depression of an accelerator pedal. Before the turbine boost pressure is created, i.e. increases, the clutch torque correction by the increment term calculation portion 15 is not output. Therefore, the target clutch torque before correction is adopted as the final target clutch torque. Then, when the turbine boost pressure is created, the clutch torque correction is started to be output by the increment term calculation portion 15 in response to the increase of the turbine boost pressure. The clutch torque correction amount is increased until the turbine boost pressure reaches a predetermined level. The final target clutch torque may be obtained in response to a rapid increase of the output torque accordingly.

Fig. 5 is a graph showing each change of the input shaft rotation speed on the transmission 3 side detected by the input shaft rotation sensor 11 in case that the engaging amount of the clutch 4 is controlled only by the output value of the feedforward term calculation portion 14 (i.e. target clutch torque before correction), and the input shaft rotation speed on the transmission 3 side in case that the engaging amount of the clutch 4 is controlled by the final target clutch torque to which the correction is applied by the increment term calculation portion 15 (i.e. target clutch torque after correction). A dotted line in Fig. 5 represents the engine rotation speed. The clutch 4 is shifted to an engaging side in response to the increase of the engine rotation speed according to the characteristic map of the feedforward term calculation portion 14. Then, the input shaft rotation number on the transmission 3 side starts to increase, which shows that the torque transmission is started. When the clutch 4 is further shifted to the engaging side, the engine rotation speed and the input shaft rotation speed on the transmission 3 side are substantially equal to each other around a center portion in Fig. 5, which shows that the clutch is in a full engaging state. At this time, substantially no difference exists between the input shaft rotation number and the engine rotation number. Thus, the engaging amount is not corrected according to the technique of JP09(1997)-112589A2 since it is determined that the clutch slipping is not caused.

The change in the input shaft rotation speed up to this point according to the aforementioned embodiment is not affected by the super charger 21. Thus, the clutch controls by the target clutch torque before correction and by the target clutch torque after correction are not different from each other. In case that the engine rotation speed is rapidly increased due to the response delay of the super charger 21 after the fully engagement state of the clutch 4, however, the clutch slipping due to the lack of clutch torque is caused when the engaging amount of the clutch 4 is controlled only by the output value from the feedforward term calculation portion 14 (target clutch torque before correction) as shown in Fig. 5 that the engine rotation speed and the input shaft rotation speed are started to be separated from each other. Meanwhile, when the engaging amount of the clutch 4 is controlled by the final clutch torque to which the correction by the increment term calculation portion 15 is applied (target clutch torque after correction), the lack of clutch torque is not caused as shown in Fig. 5 that the input shaft rotation number immediately follows the change of the engine rotation number.

Therefore, according to the clutch control device 1 of the present embodiment that controls the engaging amount of the clutch 4 by the final clutch torque to which the correction by the increment term calculation portion 15 is applied, the sufficient clutch torque may be assured appropriately, especially under the condition that the fluctuation of the output torque is large relative to the engine rotation speed. In addition, the damage to the clutch 4 may be decreased and a time period of half-clutch may be reduced.

According to the aforementioned embodiment, the clutch control device 1 includes the turbine boost pressure sensor 12. Then, the increment term calculation portion 15 calculates the clutch torque correction amount based on the turbine boost pressure. However, any items that may cause the fluctuation of the engine torque may be employed. For example, an intake air amount, a differential pressure in an intake manifold in D-Jetronic system, a varied amount of a variable valve timing of a variable valve timing lift mechanism, a variable vale lift amount, a turbine characteristic of a variable fluid amount turbocharger and the like may be adopted. Then, the characteristic map according to each item may be employed.

Further, the final target clutch torque may be further corrected by employing a term to which a result of comparison between the input shaft rotation speed from the input shaft rotation sensor 13 and the engine rotation speed from the engine rotation sensor 11 is reflected, thereby further keeping and improving the response ability of the target clutch torque to the engine torque.

Furthermore, according to the aforementioned embodiment, the feedforward term calculation portion 14 and the increment term calculation portion 15 of the clutch control device 1 obtain the respective characteristic maps for calculating the target clutch torque and the correction amount respectively. However, a structure using a function generator may be alternatively used.

Furthermore, according to the aforementioned embodiment, the clutch control device 1 includes a first sensor (engine rotation sensor 11) for monitoring the engine rotation speed and a second sensor (turbine boost pressure sensor 12) for monitoring an item (parameter) selected as an engine torque fluctuating factor (engine torque fluctuating factor parameter). The clutch control device 1 according to the present embodiment calculates the target engaging amount of the clutch 4 based on the engine rotation speed obtained by the first sensor and then corrects that target engaging amount based on the engine torque fluctuating item (parameter) obtained from the second sensor, i.e. performing the feedforward control. At this time, instead of the second sensor, a means for inputting (i.e. receiving from other mechanism and then inputting) a value of selected item (parameter) as the engine torque fluctuating factor from the other equipment mounted in the vehicle may be employed.

## Claims

1. A clutch control device (1) for performing an automatic control of an engaging amount of a clutch (4), the clutch control device including:
- a first sensor (11) for detecting an engine rotation speed,
- a second sensor (12) for detecting a factor for fluctuating an engine torque,
- a calculation means (14) for calculating a target clutch torque based on the engine rotation speed, and
- a correction means (15) for calculating a target torque correction amount,
**characterized in that**
the correction means (15) is arranged such that it calculates the target torque correction amount based on a relationship between the factor detected by the second sensor (12) and the target clutch torque calculated by the calculation means (14), and
that the clutch control device (1) is arranged such that it performs a control of the engaging amount of the clutch based on a feed forward of the target clutch torque before correction and the target torque correction amount.

2. A clutch control device (1) according to claim 1, wherein the correction means (15) corrects the target clutch torque based on a turbine boost pressure of a super charger (21) as the factor for fluctuating the engine torque.

3. A clutch control device (1) according to claim 2, wherein the correction means (15) corrects the target clutch torque by calculating a clutch torque correction factor (K) based on a characteristic map defining a relationship between the turbine boost pressure detected by the second sensor (12) and the clutch torque correction factor (K).

4. A clutch control device (1) according to claim 3, wherein the clutch torque correction factor (K) is defined that a value of the clutch torque correction factor (K) is zero while the turbine boost pressure is negative, and that a value of the clutch torque correction factor (K) increases to 0.5 at a maximum while the turbine boost pressure is positive.

5. A clutch control device (1) according to any preceding claim 1 to 4, wherein the engaging amount of the clutch (4) is controlled by a clutch actuator.

6. A clutch control device (1) according to claim 1, wherein the factor for fluctuating an engine torque is a one of an intake air amount, a differential pressure in an intake manifold in D-Jetronic system, a variable valve lift amount, a variable valve amount and a turbine characteristic of a variable fluid amount turbocharger.

7. A clutch control device (1) according to claim 2, wherein the calculation means (14), the correction means (15) and a clutch control portion (16) performs feedforward control for the target clutch torque based on a map defined by a relationship between the factor for fluctuating the engine torque and the clutch torque correction amount.

8. A clutch control device (1) according to claim 7, wherein the calculation means (14), the correction means (15) and the clutch control portion (16) has an increment term calculation portion including a characteristic map for obtaining a clutch torque correction factor in response to a turbine boost pressure.

9. A clutch control device (1) according to claim 8, wherein the increment term calculation portion calculates the target clutch torque correction amount based on the target clutch torque before correction and the clutch torque correction factor obtained from the turbine boost pressure.

10. A clutch control device (1) according to claim 9, wherein the clutch control portion (16) controls an engaging amount of the clutch by calculating the target clutch torque after correction by adding the target clutch torque before correction and the target clutch torque correction amount.

## Patentansprüche

1. Kupplungssteuervorrichtung (1) zum Durchführen einer automatischen Steuerung einer Eingriffsgröße einer Kupplung (4), welche Kupplungssteuervorrichtung enthält:
- einen ersten Sensor (11) zum Erfassen einer Motordrehzahl,
- einen zweiten Sensor (12) zum Erfassen eines Einflussfaktors zum Beeinflussen eines Motormoments,
- ein Berechnungsmittel (14) zum Berechnen eines Zielkupplungsmoments, basierend auf der Motordrehzahl, und
- ein Korrekturmittel (15) zum Berechnen einer Zielmomentkorrekturgröße,
**dadurch gekennzeichnet, dass**
das Korrekturmittel (15) derart ausgebildet ist, dass es die Zielmomentkorrekturgröße basierend auf einer Beziehung zwischen dem von dem zweiten Sensor (12) erfassten Einflussfaktor und dem von dem Berechnungsmittel (14) berechneten Zielkupplungsmoment berechnet, und
dass die Kupplungssteuervorrichtung (1) derart ausgebildet ist, dass sie eine Steuerung der Eingriffsgröße der Kupplung basierend auf einer Vorwärtszuführung des Zielkupplungsmoments vor Korrektur und der Zielmomentkorrekturgröße durchführt.

2. Kupplungssteuervorrichtung (1) nach Anspruch 1, wobei das Korrekturmittel (15) das Zielkupplungsmoment basierend auf einem Turbinenladedruck eines Aufladers (21) als der Einflussfaktor zum Beeinflussen des Motormoments korrigiert.

3. Kupplungssteuervorrichtung (1) nach Anspruch 2, wobei das Korrekturmittel (15) das Zielkupplungsmoment korrigiert, indem ein Kupplungsmomentkorrekturfaktor (K) berechnet wird, der auf einem Kennfeld basiert, das eine Beziehung zwischen dem von dem zweiten Sensor (12) erfassten Turbinenladedruck und dem Kupplungsmomentkorrekturfaktor (K) definiert.

4. Kupplungssteuervorrichtung (1) nach Anspruch 3, wobei der Kupplungskorrekturfaktor (K) derart definiert ist, dass ein Wert des Kupplungskorrekturfaktors (K) Null ist, wenn der Turbinenladedruck negativ ist, und dass ein Wert des Kupplungskorrekturfaktors (K) auf maximal 0,5 zunimmt, wenn der Turbinenladedruck positiv ist.

5. Kupplungssteuervorrichtung (1) nach einem der Ansprüche 1 bis 4, wobei die Eingriffsgröße der Kupplung (4) von einem Kupplungsstellglied gesteuert wird.

6. Kupplungssteuervorrichtung (1) nach Anspruch 1, wobei der Einflussfaktor zum Beeinflussen eines Motormoments einer folgender Parameter ist: eine Einlassluftmenge, ein Differenzdruck in einer Einlassleitung eines D-Jetronic-Systems, eine variable Ventilerhebungsgröße, eine variable Ventilgröße und eine Turbinencharakteristik eines Turboladers mit variabler Fluidmenge.

7. Kupplungssteuervorrichtung (1) nach Anspruch 2, wobei das Berechnungsmittel (14), das Korrekturmittel (15) und ein Kupplungssteuerteil (16) eine Vorwärtssteuerung des Zielkupplungsmoments durchführen, basierend auf einem Kennfeld, das durch eine Beziehung zwischen dem Einflussfaktor zum Beeinflussen des Motormoments und der Kupplungsmomentkorrekturgröße definiert ist.

8. Kupplungssteuervorrichtung (1) nach Anspruch 7, wobei das Berechnungsmittel (14), das Korrekturmittel (15) und ein Kupplungssteuerteil (16) einen Inkrementtermberechnungsteil mit einem Kennfeld zum Erhalten eines Kupplungsmomentkorrekturfaktors in Abhängigkeit von einem Turbinenladedruck enthalten.

9. Kupplungssteuervorrichtung (1) nach Anspruch 8, wobei der Inkrementtermberechnungsteil die Zielkupplungsmomentkorrekturgröße basierend auf dem Zielkupplungsmoment vor Korrektur und dem Kupplungsmomentkorrekturfaktor berechnet, der aus dem Turbinenladedruck erhalten wird.

10. Kupplungssteuervorrichtung (1) nach Anspruch 9, wobei der Kupplungssteuerteil (16) eine Eingriffsgröße der Kupplung steuert, indem das Zielkupplungsmoment nach Korrektur berechnet wird, indem das Zielkupplungsmoment vor Korrektur und die Zielkupplungsmomentkorrekturgröße addiert werden.

## Revendications

1. Dispositif de commande d'embrayage (1) pour la réalisation d'une commande automatique d'une quantité d'engagement d'un embrayage (4), le dispositif de commande d'embrayage comprenant :
- un premier capteur (11) pour la détection d'une vitesse de rotation de moteur,
- un deuxième capteur (12) pour la détection d'un facteur pour la fluctuation d'un couple moteur,
- un moyen de calcul (14) pour le calcul d'un couple d'embrayage cible sur la base de la vitesse de rotation du moteur, et
- un moyen de correction (15) pour le calcul d'une quantité de correction de couple cible,
**caractérisé en ce que**
le moyen de correction (15) est arrangé de telle façon qu'il calcule la quantité de correction de couple cible sur la base d'une relation entre le facteur détecté par le deuxième capteur (12) et le couple d'embrayage cible calculé par le moyen de calcul (14), et
le dispositif de commande d'embrayage (1) est arrangé de telle façon qu'il réalise une commande de la quantité d'engagement de l'embrayage sur la base d'une action directe secondaire du couple d'embrayage cible avant correction et de la quantité de correction du couple cible.

2. Dispositif de commande d'embrayage (1) selon la revendication 1, dans lequel le moyen de correction (15) corrige le couple d'embrayage cible sur la base d'une pression de suralimentation de turbine d'une turbine de suralimentation (21) comme facteur pour la fluctuation du couple moteur.

3. Dispositif de commande d'embrayage (1) selon la revendication 2, dans lequel le moyen de correction (15) corrige le couple d'embrayage cible en calculant un facteur de correction de couple d'embrayage (K) sur la base d'une carte caractéristique définissant une relation entre la pression de suralimentation de la turbine détectée par le deuxième capteur (12) et le facteur de correction du couple d'embrayage (K).

4. Dispositif de commande d'embrayage (1) selon la revendication 3, dans lequel le facteur de correction de couple d'embrayage (K) est défini de façon qu'une valeur du facteur de correction de couple d'embrayage (K) soit zéro tandis que la pression de suralimentation de turbine est négative, et qu'une valeur du facteur de correction de couple d'embrayage (K) augmente à 0,5 à un maximum tandis que la pression de suralimentation de turbine est positive.

5. Dispositif de commande d'embrayage (1) selon l'une quelconque des revendications précédentes 1 à 4, dans lequel la quantité d'engagement de l'embrayage (4) est commandée au moyen d'un actionneur d'embrayage.

6. Dispositif de commande d'embrayage (1) selon la revendication 1, dans lequel le facteur pour fluctuer un couple moteur est l'une d'une quantité d'air d'admission, d'une pression différentielle dans un collecteur d'admission dans un système D-Jetronic, d'une quantité d'élévation de soupape variable, d'une quantité de soupape variable et d'une caractéristique de turbine d'une quantité de fluide variable d'un torbocompresseur.

7. Dispositif de commande d'embrayage (1) selon la revendication 2, dans lequel le moyen de calcul (14), le moyen de correction (15) et une partie de commande d'embrayage (16) réalise la régulation avec commande anticipatrice pour le couple d'embrayage cible sur la base d'une carte définie au moyen d'une relation entre le facteur pour fluctuer le couple moteur et la quantité de correction de couple d'embrayage.

8. Dispositif de commande d'embrayage (1) selon la revendication 7, dans lequel le moyen de calcul (14), le moyen de correction (15) et la partie de commande d'embrayage (16) a une partie de calcul de terme d'incrément comprenant une carte caractéristique pour l'obtention d'un facteur de correction de couple d'embrayage en réponse à une pression de suralimentation de turbine.

9. Dispositif de commande d'embrayage (1) selon la revendication 8, dans lequel la partie de calcul de terme d'incrément calcule la quantité de correction de couple d'embrayage cible sur la base du couple d'embrayage cible avant la correction et du facteur de correction de couple d'embrayage obtenu à partir de la pression de suralimentation de la turbine.

10. Dispositif de commande d'embrayage (1) selon la revendication 9, dans lequel la partie de commande d'embrayage (16) commande une quantité d'engagement de l'embrayage en calculant le couple d'embrayage cible après la correction en ajoutant le couple d'embrayage cible avant la correction et la quantité de correction de couple d'embrayage cible.
